# EUROPEAN PATENT SPECIFICATION

(11) **EP 3 879 972 B1**
(45) Date of publication and mention of the grant of the patent: **02.11.2022**
(21) Application number: 20704301.9
(22) Date of filing: 13.02.2020
(51) Int. Cl.: A01J 25/00, A23C 9/12, A47J 27/00

(54) **APPLIANCE FOR THE PRODUCTION OF DAIRY PRODUCTS**
VORRICHTUNG ZUR HERSTELLUNG VON MILCHPRODUKTEN
APPAREIL PERMETTANT DE PRODUIRE DES PRODUITS LAITIERS

(30) Priority: 19.02.2019 IT 201900002391
(43) Date of publication of application: 22.09.2021
(73) Proprietor: De'Longhi Appliances S.r.l. Divisione Commerciale ARIETE, 50013 Campi Bisenzio, Firenze (IT)
(72) Inventor: CIFARELLI, Filippo, 50122 Firenze (IT); PICCHI, Michele, 56020 Pontedera (Pisa) (IT); SALVADORI, Veronica, 59100 Prato (IT)
(74) Representative: Rapisardi, Mariacristina
(86) International application number: PCT/EP2020/053709
(87) International publication number: WO 2020/169438

(56) References cited:
- WO-A1-2016/047861
- DE-A1- 2 814 563
- KR-A- 20160 120 912
- Anonymous: "Amazon.de: Rosenstein & Söhne Joghurtmaker: XL-Joghurt-Maker für griechischen Joghurt, Naturjoghurt u.v.m, 1, 8 l (Yoghurtbereiter)", , 21 December 2017 (2017-12-21), XP055630606, Retrieved from the Internet: URL:https://www.amazon.de/Rosenstein-Söhne -Joghurtmaker-XL-Joghurt-Maker-griechische n/dp/B078K8SSY3 [retrieved on 2019-10-10]

## Description

The present invention relates to an appliance for the production of dairy products. In particular, the present invention finds application in the field of the production of yoghurt, Greek yoghurt and fresh cheese in a domestic environment.

In recent years, consumers have developed a strong interest in personally preparing food products at home so as to be able to control the different production steps and be able to choose and control the raw materials to be processed. This trend has pushed several companies to produce devices for the production of dairy products intended for domestic self-production.

Kits for the production of yoghurt are known, as are appliances for the production of yoghurt, so-called yoghurt makers. Similarly, kits for the production of cheese are known. A device for the preparation of dairy products is known from KR 2016 0120912.

These self-production kits comprise for example cooking bowls for the transformation of milk, kitchen thermometers to check the temperature of the heated liquid and drainage containers to separate the dairy product from the liquid production wastes.

Using these production kits, the milk processing steps are not carried out by one and the same device, but by different devices in different places.

The correct use of said kits and consequently the result of the transformation of the milk are strongly dependent on the level of experience of the user.

On the one hand the control of the temperature in the transformation steps is strongly dependent on the user's experience, on the other hand the cooking step and the draining step take place in separate locations, resulting in a need for space for the production and the possibility of errors and problems related to hygiene and health.

Electrical yoghurt makers instead have transformation environments at a controlled temperature, however they do not have sufficient versatility for the production of other dairy products. For example, electrical yoghurt makers can only produce yoghurt and not Greek yoghurt and certainly cannot produce fresh cheese. The technical task of the invention is to overcome the limits set out above.

The object of the present invention is to provide an appliance for the production of dairy products in which all the production steps are integrated into a single device. A further object of the present invention is to provide an appliance for the production of dairy products that is highly versatile, easy to use and compact.

The technical task as well as these and other objects according to the present invention are achieved realising an appliance for the production of dairy products according to claim 1.

Further characteristics and advantages of the invention will more fully emerge from the description of a preferred but not exclusive embodiment of the appliance, illustrated by way of non-limiting example in the appended drawings, wherein:

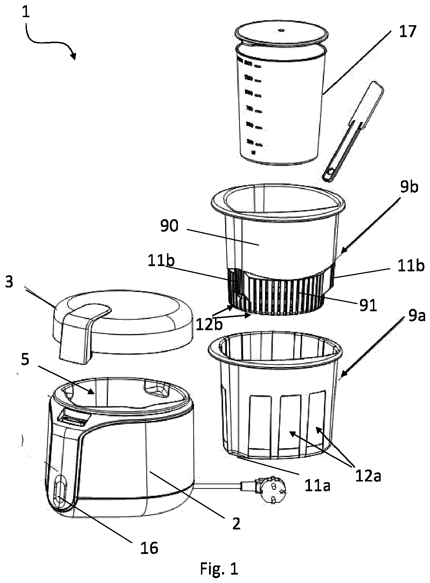

figure 1 is an exploded view of the appliance according to the present invention;

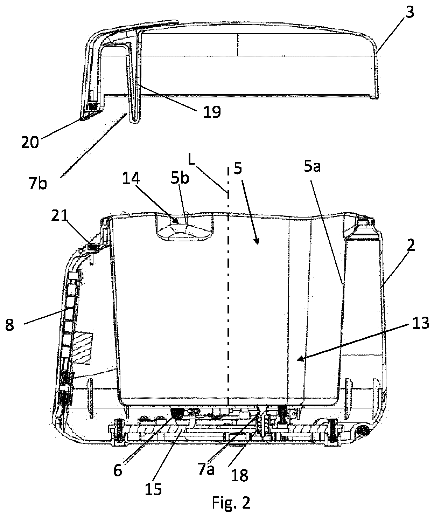

figure 2 is a sectional view of the appliance of figure 1;

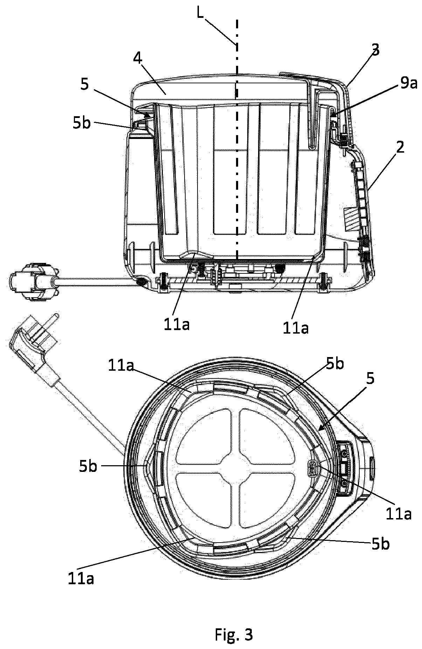

figure 3 is a sectional view of the side of the appliance and a top view with a first processing container in a first position;

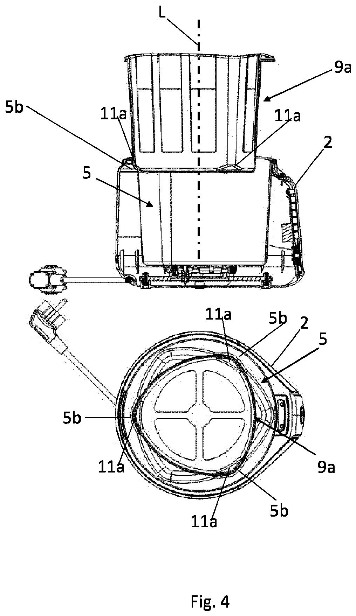

figure 4 is a sectional view of the side of the appliance and a top view with a first processing container in a second position;

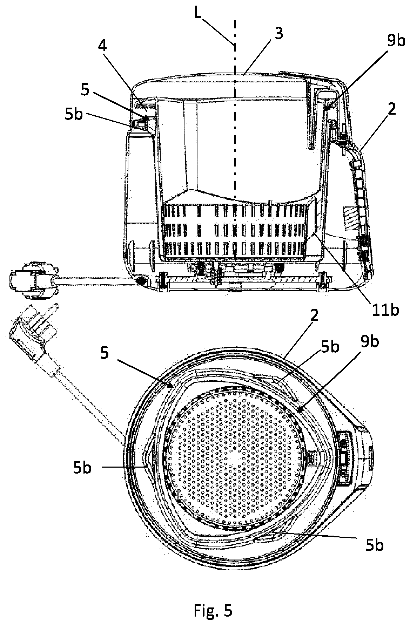

figure 5 is a sectional side view and a sectional top view of the appliance with a second processing container in a first position;

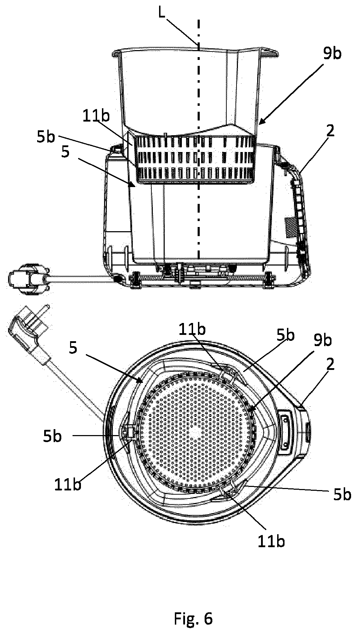

figure 6 is a sectional side view and a sectional top view of the appliance with a second processing container in a second position;

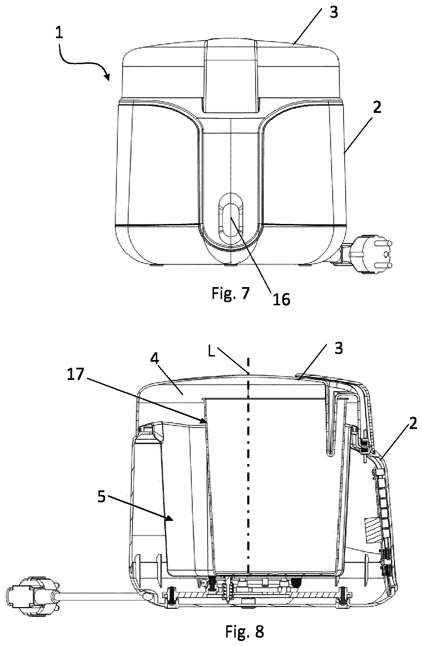

figure 7 is a side view of the appliance with the cover closed;
figure 8 is a sectional top view of the appliance with a third processing container;

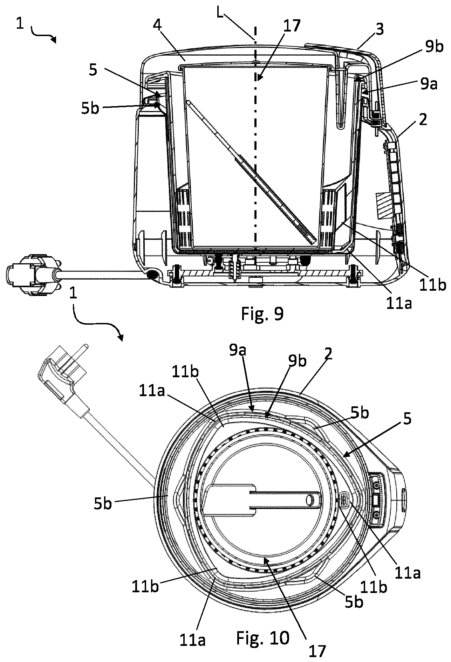

figure 9 and figure 10 are a side view and a sectional top view of the appliance with a first container, a second container and a third container stacked.

With particular reference to the figures, the appliance for the production of dairy products, generically indicated with the number 1, comprises a hollow body 2 and a closing cover 3 which delimits with the hollow body 2 a housing compartment 4. The hollow body 2 has a mainly vertical extension, substantially cylindrical in shape and comprises a base and a lateral wall that delimits an upper opening.

A containment tank 5 is arranged with an axis extending vertically L inside the housing compartment 3. The containment tank 5 is made of a thermoconductive material, preferably metallic material. In a preferred embodiment the containment tank 5 has an edge which can be coupled, for example by interlocking, with the upper opening of the hollow body 2.

The containment tank 5 comprises a bottom and at least one internal lateral wall 5a.

Advantageously, the containment tank 5 is configured as both a cooking tank and a draining tank of the dairy products.

According to an embodiment shown in the figures, the containment tank 5 is fixed to the hollow body 2. In other embodiments not shown, the tank 5 is removable from the containment body to be able to be easily washed.

Electric heating means 6, at least a first temperature sensor 7a, 7b and an electronic control board 8 are positioned inside the housing compartment 4. The electronic control board 8 controls said electric heating means 6 and is in data connection with each temperature sensor 7a, 7b.

The heating means 6 are preferably made in the form of an electrical resistance, which heats and transfers it heat to the containment tank 5.

The heating means 6 are positioned inside the base of the hollow body 2. Preferably, the heating means 6 are fixed to a support plate 15 of thermally insulating material connected to the base in a raised manner and are in contact with the external surface of the bottom of the containment tank 5. The support plate 15 therefore acts as an anchoring base and heat shield for the heat released by the heating means 6.

Preferably, the appliance 1 has a power supply for the heating means 6 and the electronic board 8.

The electronic control board 8 is positioned inside the housing compartment 4 in the space between the lateral wall of the hollow body 2 and the external surface of the containment tank 5.

In particular, the electronic board 8 is internally fixed to the lateral wall of the hollow body 2 and has at least one control switch of the appliance 1, an emitter of a sound signal and/or a plurality of light emitters which indicate the status of the control switch.

In greater detail, the control switch can be activated by means of a suitable pushbutton 16 for activation and control supported by the lateral wall of the hollow body 2.

Advantageously, the lateral wall of the hollow body 2 has a screen printed and transparent portion at the light emitters of the electronic control board 8. In this way, the user can easily view the processing state of the appliance 1 and can change the processing cycles by pushing the pushbutton 16.

The appliance 1 comprises a first and at least a second container 9a, 9b for processing dairy products which can be inserted in the containment tank 5.

The first and the second container 9a, 9b are stackable and have drainage openings 12a, 12b.

The drainage openings 12a, 12b between the two containers 9a and 9b differ in shape and size.

According to one aspect of the invention, the appliance 1 has first forced positioning means 13 of the containers 9a, 9b in the tank 5 at a first axial position combined with at least a first angular position around the vertical axis L and second forced positioning means 14 of the containers 9a, 9b in the containment tank 5 at a second axial position combined with at least a second angular position around the vertical axis L, wherein the second axial position is different from the first axial position and the first angular position is different from the second angular position.

According to a particular aspect of the invention, the containment tank 5 comprises the first and second forced positioning means 13, 14.

Substantially, each container 9a, 9b is supported in two different axial positions interacting with the first and with the second forced positioning means 13, 14.

In particular, the first and the second container 9a, 9b have a form-coupling with the first forced positioning means 13 and with the second forced positioning means 14.

It should be noted that in the first axial position combined with at least a first angular position around the vertical axis L the containers 9a, 9b are inside the housing compartment 4. In other words, in the first axial position each container 9a, 9b is inserted both individually and together in the containment tank 5 and is covered by the closing cover 3 of the hollow body 2.

In the second axial position combined with at least a second angular position around the vertical axis, the containers 9a, 9b are partially outside said housing compartment 4. In other words, in the second axial position the containers 9a, 9b are in a raised position with respect to the bottom of the containment tank 5 and the cover 3 is not placed to close the hollow body 2.

According to a preferred embodiment, the first forced positioning means 13 comprise an internal lateral surface 5a of the tank 5 having a variable radial distance from the vertical axis L.

According to a further preferred embodiment, the second forced positioning means 14 comprise a plurality of recesses 5b of the internal lateral surface 5a of the tank 5 which lead to the top of the internal lateral surface 5a.

Therefore, each container 9a, 9b is supported by the tank in the first axial position in which the container 9a, 9b is substantially in contact with the bottom of the tank 5 and in the second axial position in which the container 9a, 9b is in a raised position with respect to the bottom of the tank 5.

In the first axial position each container 9a, 9b is individually positioned inside the housing compartment 5 so as to allow the cooking of the dairy product, while in the second axial position each container 9a, 9b, once the cover 3 is removed from the closing position, is positioned partially outside of the housing compartment 4 so as to allow the draining of the waste liquids of the dairy product.

The internal lateral surface 5a of the tank 5 has a prismatic shape with polygonal bases and the recesses 5b are positioned at the intermediate point of the sides of the upper base.

Preferably, the bases of the internal lateral surface having a prismatic shape have arcuate sides, thereby increasing the containment volume and the heat exchange surface of the tank 5.

In the preferred but not exclusive embodiment of the invention illustrated in the figures, the internal lateral surface 5a of the tank 5 has a prismatic shape with triangular bases and the recesses 5b are positioned at the intermediate point of the sides of the upper triangular base. In other embodiments not shown, the internal surface 5a of the tank 5 with a prismatic shape can have bases in the form of any polygon, such as a square or a pentagon.

In the embodiment shown in the figures, both the first and second axial position of each container 9a, 9b is combined with three possible angular positions of rotation about the vertical axis L. The angular positions are determined by the geometry of the internal lateral surface 5a of the tank 5 and, in the embodiment shown in the figures, there are three possible angular positions of each container 9a, 9b combined with each axial position.

The positioning of the recesses 5b with respect to the extension of the lateral wall 5a of the tank 5 defines the different angular position of each container 9a, 9b with respect to the first and second axial position.

In the embodiment shown in the figures, the recesses 5b are positioned in the intermediate point of the sides of the upper triangular base of the internal lateral surface 5a and are staggered by 60 degrees with respect to the vertices of the triangular bases of the internal lateral surface 5a of the tank 5.

Therefore, in the second axial position each container 9a, 9b has an angular position rotated about the vertical axis by 60 degrees with respect to the angular position in the first axial position.

It should be noted that the particular shape of the internal surface 5a of the tank 5 acts as an embedding, so that only containers 9a, 9b compatible in shape can be inserted and supported by the tank 5 itself in two different axial positions.

The first and the second container 9a, 9b have an external lateral surface 10a, 10b conjugate in shape to the internal lateral surface 5a of said tank 5 in the first axial position combined with at least a first angular position with respect to said vertical axis L.

In greater detail, the first and the second container 9a, 9b have localized formations 11a, 11b conjugate in shape with the recesses 5b in said second axial position combined with at least a second angular position around the vertical axis L.

The first container 9a thus comprises an external lateral surface 10a conjugate in shape with the internal lateral surface 5a of the tank 5 and has localized formations 11a in the form of hollows formed on the base of the first container 9a that are conjugate in shape to the recesses 5b of the tank. In particular, the hollows are positioned at the vertices of the base of the first container 9a.

The first container has drainage openings 12a on its base and on its lateral surface and comprises a filtration mesh for each drainage opening 12a. Each filtration mesh is preferably made with a fabric of a natural and/or synthetic type.

It should be noted that in the second axial position, the vertical orthogonal projection of the first container 9a lies inside the tank 5. In this way, in the second axial position, the excess liquid present inside the first container 9a percolates by gravity inside the tank 5 itself.

The first container 9a is preferably a container for the production of Greek yoghurt. Instead, the second container 9b comprises an apical portion 90 conjugate in shape to the internal lateral surface 5a of the tank 5 in the first axial position and comprises a cylindrical basal portion 91 which has the drainage openings 12b.

The second container 9b has the localized formations 11b on the external lateral surface 10b. In particular, the localized formations 11b are made in the form of lateral projections extending vertically between the apical portion 90 and the basal portion 91. The lateral projections are conjugate in shape to the recesses 5b of the tank 5 and are positioned at the vertices of the base of the apical portion 90 conjugate in shape to the internal lateral surface 5a of the tank 5.

The basal portion 91 has the drainage openings 12b on its lateral surface and on its base in the form of slots and substantially acts as a mould for fresh cheese.

In the second axial position, the vertical orthogonal projection of the basal portion 91 of the second container 9b is completely contained inside the containment tank 5.

The slots, once the second container 9b is positioned in the second axial position, allow the drainage of excess liquids inside the tank 5 and the formation of the typical wheel of fresh cheese.

The second container 9b is substantially a container for the production of fresh cheese.

It should be noted that the second container 9b has an external lateral surface 10b conjugate in shape to the internal lateral surface of the first container 9a. In this way the second container 9b is stackable in the first container 9a and the overall dimensions of the appliance 1 itself are therefore reduced. In fact, when the appliance 1 is not in function, each container 9a, 9b is inside the housing compartment 4 defined by the hollow body 2 closed by the cover 3.

The appliance 1 comprises a third container 17, without slots, positionable inside the containment tank 5 and completely contained within the housing compartment 4.

The third container 17 is substantially a cylindrical container of known type for the production of yoghurt.

It should be noted that the third container 17 can be inserted in the second container 9b stacked on the first container 9a contained inside the tank 5 and closed within the housing compartment 4 once the hollow body 2 is covered with its cover 3.

According to a further aspect of the present invention, the appliance 1 comprises a first temperature sensor 7a outside the tank 5 and a second temperature sensor 7b inside the tank 5.

Preferably the first and the second temperature sensor 7a, 7b are a thermocouple. The first temperature sensor 7a is positioned in contact with the tank 5.

Preferably the first temperature sensor 7a is in contact with the external surface of the bottom of the containment tank 5.

In particular, in the embodiment shown in the figures, the first temperature sensor 7a is supported by said support plate 15 and is maintained in contact with the bottom of the tank 5 contrastingly and by the action of an elastic element 18. Preferably the elastic element 18 is a spring.

Instead, the second temperature sensor 7b is positioned inside the tank 5 in such a way as to be able to monitor the temperature of the housing compartment 4.

In the preferred embodiment the second temperature sensor 7b is housed in a seat 19 of the cover 2 projecting from the internal surface of the cover 2 in the vertical direction towards the inside of the tank 5. In this case, the cover 2 comprises a first pair of electrical contacts 20 which can be conjugated to a second pair of electrical contacts 21 supported by the hollow body 2 and connected to the electronic control board 8.

In other embodiments not shown, the second sensor 7b is supported by the tank 5 and can be in contact with the wall of the tank 5 both internally and externally with respect to the same.

In greater detail, the electronic board 8 is programmed to start a plurality of programs for the production of dairy products, selectable by the user. Some recipes that make use of these programs are now briefly described.

### CLASSIC Fresh Cheese Recipe:

Insert the second container 9b into the tank 5 in the first axial position and put the ingredients inside the same (2 litres of milk and 250 g of yoghurt); select the classic recipe program with the button 16.

The classic recipe program provides for a first heating step (approximately 20 minutes up to 35°C) following which the appliance 1 emits a signal (light and/or sound) to add the rennet; once the rennet has been added, the classic recipe program provides for a second heating step (approximately 2 hours - 35°C) at the end of which the appliance 1 emits a signal (light and/or sound) for the rough cutting of the curd; following the cutting of the curd, the classic recipe program provides for a first rest step (approximately 2 hours) at the end of which the appliance 1 emits a signal (light and/or sound) for the mincing of the curd; following the mincing, the classic recipe program provides for a second rest step of 15 minutes, at the end of which the appliance 1 emits a signal (light and/or sound) to lift and rotate the second container 9b in the second axial position for the drainage of the dairy product.

The user then waits for the desired consistency or stores the second container 9b in the fridge.

### QUICK Fresh Cheese and/or Cottage Cheese Recipe:

Insert the second container 9b into the tank 5 in the first axial position and put the ingredients inside the same (1.5 litres of milk and 750 g of yoghurt); select the quick recipe program with the button 16.

The quick recipe program comprises a heating step (approximately 3 hours up to 90°C - 30 minutes of rest) at the end of which the appliance 1 emits a signal (light and/or sound) to warn the user that the second container 9b must be lifted and rotated in the second axial position to drain the dairy product. The user then waits for the desired consistency or stores the second container 9b in the fridge.

### GREEK YOGHURT Recipe:

Insert the first container 9a into the tank 5 in the first axial position and put the ingredients inside the same (2 litres of milk and 250 g of yoghurt); select the Greek yoghurt recipe program with the button 16.

Wait for the preparation of the yoghurt (8-12 hours); at the end of the preparation the appliance emits a signal (light and/or sound) to warn the user that it is ready for filtering. Lift and rotate the first container 9a, positioning it in the second axial position and wait until it has obtained the desired consistency.

The appliance 1 as conceived herein is susceptible to numerous modifications and variants, all falling within the scope of the appended claims.

## Claims

1. An appliance (1) for the production of dairy products comprising a hollow body (2) and a closing cover (3) delimiting with said hollow body (2) a housing compartment (4), a containment tank (5) arranged with an axis extending vertically (L) in said compartment (4), electric heating means (6) positioned inside said compartment (4), at least one first temperature sensor (7a, 7b) positioned inside said compartment (4), an electronic control board (8) of said electric heating means (6), one first and at least one second stackable container (9a, 9b) for processing dairy products and having drainage openings (12a, 12b) in said containers (9a, 9b) which differ in shape and size, the appliance further having first forced positioning means (13) of said containers (9a, 9b) in said tank (5) at a first axial position combined with at least a first angular position around said vertical axis (L) and second forced positioning means (14) of said containers in said tank (5) at a second axial position combined with at least a second angular position around said vertical axis (L), wherein said second axial position is different from said first axial position and said first angular position is different from said second angular position.

2. The appliance (1) for the production of dairy products according to claim 1, **characterized in that** said tank (5) has said first forced positioning means (13) and said second forced positioning means (14).

3. The appliance (1) for the production of dairy products according to any one of the preceding claims, **characterized in that** said first and second container (9a, 9b) are form-coupled to said first forced positioning means (13) and said second forced positioning means (14).

4. An appliance (1) for the production of dairy products according to any one of the preceding claims, **characterized in that** in said first axial position combined with at least a first angular position, said containers (9a, 9b) are inside said compartment (4) and in said second axial position combined with at least a second angular position said containers (9a, 9b) are partially outside said compartment (4).

5. The appliance (1) for the production of dairy products according to any one of the preceding claims, **characterized in that** said first forced positioning means (13) comprise an internal lateral surface (5a) of said tank (5) having a variable radial distance from said vertical axis (L).

6. The appliance (1) for the production of dairy products according to the preceding claim, **characterized in that** said second forced positioning means (14) comprise a plurality of recesses (5b) of said internal lateral surface (5a) opening at the top of said internal lateral surface (5a).

7. The appliance (1) for the production of dairy products according to the preceding claim, **characterized in that** said internal lateral surface (5a) of said tank (5) has the shape of a prism with polygonal bases and said recesses (5b) are positioned at the intermediate point of the sides of the upper base of said prism.

8. The appliance (1) for the production of dairy products according to any preceding claim 6-7 , **characterized in that** said first and second container (9a, 9b) have an external lateral surface (10a, 10b) conjugate in shape to said internal lateral surface (5a) of said tank (5) in said first axial position combined with at least a first angular position, and localized formations (11a, 11b) conjugate in shape to said recesses (5b) in said second axial position combined with at least a second angular position.

9. The appliance (1) for the production of dairy products according to any preceding claim from 5 to 8 , **characterized in that** said second container (9b) comprises an apical portion (90) conjugate in shape to said internal lateral surface (5a) of said tank (5) in said first axial position combined with at least a first angular position and a cylindrical basal portion (91) having said openings (12b).

10. The appliance (1) for the production of dairy products according to any one of the preceding claims, **characterized in that** it comprises a first temperature sensor (7a) outside the tank (5) and a second temperature sensor (7b) inside the tank (5).

11. The appliance (1) for the production of dairy products according to the preceding claim, **characterized in that** said first sensor (7a) is positioned in contact with said tank (5).

## Patentansprüche

1. Vorrichtung (1) zur Herstellung von Milchprodukten, umfassend einen Hohlkörper (2) und einen Verschlussdeckel (3), der mit dem Hohlkörper (2) eine Aufnahmeunterteilung (4) abgrenzt, einen Enthaltetank (5), der so angeordnet ist, dass sich eine Achse (L) vertikal in die Unterteilung (4) erstreckt, elektrische Heizmittel (6), die in der Unterteilung (4) positioniert sind, mindestens einen ersten Temperatursensor (7a, 7b), der in der Unterteilung (4) positioniert ist, eine elektronische Reglerkarte (8) der elektrischen Heizmittel (6), einen ersten und mindestens einen zweiten stapelbaren Behälter (9a, 9b) zum Verarbeiten von Milchprodukten und aufweisend Ablauföffnungen (12a, 12b) in den Behältern (9a, 9b), die sich in puncto Form und Größe unterscheiden, wobei die Vorrichtung zudem erste Mittel für die forcierte Positionierung (13) der Behälter (9a, 9b) im Tank (5) an einer ersten axialen Position aufweist, kombiniert mit mindestens einer ersten Winkelposition rund um die vertikale Achse (L), und zweite Mittel für die forcierte Positionierung (14) der Behälter im Tank (5) an einer zweiten axialen Position, kombiniert mit mindestens einer zweiten Winkelposition rund um die vertikale Achse (L), wobei sich die zweite axiale Position von der ersten axialen Position unterscheidet und sich die erste Winkelposition von der zweiten Winkelposition unterscheidet.

2. Vorrichtung (1) zur Herstellung von Milchprodukten nach Anspruch 1, **dadurch gekennzeichnet, dass** der Tank (5) die ersten Mittel für die forcierte Positionierung (13) und die zweiten Mittel für die forcierte Positionierung (14) aufweist.

3. Vorrichtung (1) zur Herstellung von Milchprodukten nach einem der vorhergehenden Ansprüche, **dadurch gekennzeichnet, dass** der erste und der zweite Behälter (9a, 9b) formschlüssig mit den ersten Mitteln für die forcierte Positionierung (13) und den zweiten Mitteln für die forcierte Positionierung (14) gekuppelt sind.

4. Vorrichtung (1) zur Herstellung von Milchprodukten nach einem der vorhergehenden Ansprüche, **dadurch gekennzeichnet, dass** sich die Behälter (9a, 9b) in der ersten axialen Position, kombiniert mit mindestens einer ersten Winkelposition, in der Unterteilung (4) befinden und sich die Behälter (9a, 9b) in der zweiten axialen Position, kombiniert mit mindestens einer zweiten Winkelposition, teilweise außerhalb der Unterteilung (4) befinden.

5. Vorrichtung (1) zur Herstellung von Milchprodukten nach einem der vorhergehenden Ansprüche, **dadurch gekennzeichnet, dass** die ersten Mittel für die forcierte Positionierung (13) eine interne Seitenoberfläche (5a) des Tanks (5) umfassen, aufweisend eine variable radiale Entfernung von der vertikalen Achse (L).

6. Vorrichtung (1) zur Herstellung von Milchprodukten nach dem vorhergehenden Anspruch, **dadurch gekennzeichnet, dass** die zweiten Mittel für die forcierte Positionierung (14) eine Vielzahl von Vertiefungen (5b) der internen Seitenoberfläche (5a) umfassen, die sich an der Oberseite der internen Seitenoberfläche (5a) öffnen.

7. Vorrichtung (1) zur Herstellung von Milchprodukten nach dem vorhergehenden Anspruch, **dadurch gekennzeichnet, dass** die interne Seitenoberfläche (5a) des Tanks (5) die Form eines Prismas mit polygonalen Basen aufweist und die Vertiefungen (5) am Zwischenpunkt der Seiten der oberen Basis des Prismas positioniert sind.

8. Vorrichtung (1) zur Herstellung von Milchprodukten nach einem der vorhergehenden Ansprüche 6-7, **dadurch gekennzeichnet, dass** der erste und der zweite Behälter (9a, 9b) eine äußere Seitenoberfläche (10a, 10b) aufweisen, die in der Form ergänzend zur internen Seitenoberfläche (5a) des Tanks (5) ausgebildet ist, in der ersten axialen Position, kombiniert mit mindestens einer ersten Winkelposition, sowie lokalisierte Formationen (11a, 11b), die in der Form ergänzend zu den Vertiefungen (5b) ausgebildet sind, in der zweiten axialen Position, kombiniert mit mindestens einer zweiten Winkelposition.

9. Vorrichtung (1) zur Herstellung von Milchprodukten nach einem der vorhergehenden Ansprüche 5 bis 8, **dadurch gekennzeichnet, dass** der zweite Behälter (9b) einen Scheitelabschnitt (90) umfasst, der in der Form ergänzend zur internen Seitenoberfläche (5a) des Tanks (5) ausgebildet ist, in der ersten axialen Position, kombiniert mit mindestens einer ersten Winkelposition, und einen zylindrischen Basisabschnitt (91), aufweisend die Öffnungen (12b).

10. Vorrichtung (1) zur Herstellung von Milchprodukten nach einem der vorhergehenden Ansprüche, **dadurch gekennzeichnet, dass** sie einen ersten Temperatursensor (7a) außerhalb des Tanks (5) und einen zweiten Temperatursensor (7b) im Tank (5) umfasst.

11. Vorrichtung (1) zur Herstellung von Milchprodukten nach dem vorhergehenden Anspruch, **dadurch gekennzeichnet, dass** der erste Sensor (7a) in Kontakt mit dem Tank (5) positioniert ist.

## Revendications

1. Appareil (1) permettant de produire des produits laitiers, comprenant un corps creux (2) et un couvercle de fermeture (3) délimitant avec ledit corps creux (2) un compartiment de logement (4), un réservoir de contenance (5) disposé avec un axe se prolongeant verticalement (L) dans ledit compartiment (4), des moyens de chauffage électrique (6) positionnés à l'intérieur dudit compartiment (4), au moins un premier capteur de température (7a, 7b) positionné à l'intérieur dudit compartiment (4), une carte de commande électronique (8) desdits moyens de chauffage électrique (6), un premier et au moins un second récipient empilable (9a, 9b) pour traiter des produits laitiers et comportant des ouvertures de drainage (12a, 12b) dans lesdits récipients (9a, 9b) qui diffèrent en forme et en taille, l'appareil comportant de plus des premiers moyens de positionnement forcé (13) desdits récipients (9a, 9b) dans ledit réservoir (5) en correspondance d'une première position axiale combinée à au moins une première position angulaire autour dudit axe vertical (L) et des seconds moyens de positionnement forcé (14) desdits récipients dans ledit réservoir (5) en correspondance d'une seconde position axiale combinée à au moins une seconde position angulaire autour dudit axe vertical (L), dans lequel ladite seconde position axiale est différente de ladite première position axiale et ladite première position angulaire est différente de ladite seconde position angulaire.

2. Appareil (1) permettant de produire des produits laitiers selon la revendication 1, **caractérisé en ce que** ledit réservoir (5) comporte lesdits premiers moyens de positionnement forcé (13) et lesdits seconds moyens de positionnement forcé (14).

3. Appareil (1) permettant de produire des produits laitiers selon l'une quelconque des revendications précédentes, **caractérisé en ce que** lesdits premier et second récipients (9a, 9b) sont couplés par la forme auxdits premiers moyens de positionnement forcé (13) et auxdits seconds moyens de positionnement forcé (14).

4. Appareil (1) permettant de produire des produits laitiers selon l'une quelconque des revendications précédentes, **caractérisé en ce que** dans ladite première position axiale combinée à au moins une première position angulaire, lesdits récipients (9a, 9b) se trouvent à l'intérieur dudit compartiment (4) et dans ladite deuxième position axiale combinée à au moins une deuxième position angulaire, lesdits récipients (9a, 9b) se trouvent partiellement à l'extérieur dudit compartiment (4).

5. Appareil (1) permettant de produire des produits laitiers selon l'une quelconque des revendications précédentes, **caractérisé en ce que** lesdits premiers moyens de positionnement forcé (13) comprennent une surface latérale interne (5a) dudit réservoir (5) ayant une distance radiale variable par rapport audit axe vertical (L).

6. Appareil (1) permettant de produire des produits laitiers selon la revendication précédente, **caractérisé en ce que** lesdits seconds moyens de positionnement forcé (14) comprennent une pluralité de renfoncements (5b) de ladite surface latérale interne (5a) s'ouvrant au sommet de ladite surface latérale interne (5a).

7. Appareil (1) permettant de produire des produits laitiers selon la revendication précédente, **caractérisé en ce que** ladite surface latérale interne (5a) dudit réservoir (5) a la forme d'un prisme avec des bases polygonales et lesdits renfoncements (5b) sont positionnés au point intermédiaire des côtés de la base supérieure dudit prisme.

8. Appareil (1) permettant de produire des produits laitiers selon l'une quelconque des revendications précédentes 6-7, **caractérisé en ce que** lesdits premier et second récipients (9a, 9b) comporte une surface latérale externe (10a, 10b) de forme conjuguée à ladite surface latérale interne (5a) dudit réservoir (5) dans ladite première position axiale combinée à au moins une première position angulaire, et des formations localisées (11a, 11b) de forme conjuguée auxdits renfoncements (5b) dans ladite seconde position axiale combinée à au moins une seconde position angulaire.

9. Appareil (1) permettant de produire des produits laitiers selon l'une quelconque des revendications précédentes de 5 à 8, **caractérisé en ce que** ledit second récipient (9b) comprend une partie apicale (90) de forme conjuguée à ladite surface latérale interne (5a) dudit réservoir (5) dans ladite première position axiale combinée à au moins une première position angulaire et une partie de base cylindrique (91) comportant lesdites ouvertures (12b).

10. Appareil (1) permettant de produire des produits laitiers selon l'une quelconque des revendications précédentes, **caractérisé en ce qu'**il comprend un premier capteur de température (7a) à l'extérieur du réservoir (5) et un second capteur de température (7b) à l'intérieur du réservoir (5).

11. Appareil (1) permettant de produire des produits laitiers selon la revendication précédente, **caractérisé en ce que** ledit premier capteur (7a) est positionné en contact avec ledit réservoir (5).
